# EUROPÄISCHE PATENTSCHRIFT

(11) **EP 1 459 824 B1**
(45) Veröffentlichungstag und Bekanntmachung des Hinweises auf die Patenterteilung: **08.01.2014**
(21) Anmeldenummer: 04001907.7
(22) Anmeldetag: 29.01.2004
(51) Int. Cl.: B23C 3/18, B24B 31/00, B23Q 3/08

(54) **Verfahren zum Herstellen von strömungsbeaufschlagten Bauteilen**
Manufacturing method for parts exposed to a gas flow
Procédé de fabrication des parties exposées à un courant de gaz

(30) Priorität: 19.03.2003 DE 10312224
(43) Veröffentlichungstag der Anmeldung: 22.09.2004
(73) Patentinhaber: MTU Aero Engines AG, 80995 München (DE)
(72) Erfinder: Heinrich, Stefan, 82276 Adelshofen (DE); Schnellbach, Johann, 85757 Karlsfeld (DE); Zimmermann, Hans, 84036 Landshut (DE)

(56) Entgegenhaltungen:
- EP-A- 1 285 714
- WO-A-00/29171

## Beschreibung

Die Erfindung betrifft ein Verfahren zum Herstellen von strömungsbeaufschlagten Bauteilen nach dem Oberbegriff des Patentanspruchs 1. Ein solches Verfahren ist aus der EP 1 128 933 B1 bekannt.

Bei der Herstellung von strömungsbeaufschlagten Bauteilen, insbesondere bei der Herstellung von Rotorscheiben oder -ringen mit integrierter Beschaufelung, wird in der Regel nach dem Stand der Technik so vorgegangen, dass das strömungsbeaufschlagte Bauteil aus einem Werkstück herausgefräst wird und anschließend das durch Fräsen hergestellte Bauteil einer Feinbearbeitung unterzogen wird.

Die US 6 077 002 offenbart ein Fräsverfahren zur Herstellung von Rotorscheiben mit integraler Beschaufelung. Bei dem dort gezeigten Fräsverfahren wird ein Fräser derart relativ zum zu bearbeitenden Werkstück bewegt, dass sich einstellende Fräsrillen in etwa parallel zu der aerodynamischen Durchströmungsrichtung des Bauteils im Betrieb, z.B. bei einer späteren Anwendung in einer Gasturbine, ausgerichtet sind.

Die EP 1 128 933 B1 offenbart eine Anordnung zur Feinbearbeitung von Rotorscheiben mit integraler Beschaufelung. Das durch Fräsen hergestellte Bauteil wird hierzu von einem Feinbearbeitungsmittel durchströmt. Der Stand der Technik gemäß EP 1 128 933 B1 betrifft das sogenannte Chemisch Unterstützte Gleitschleifen.

Hiervon ausgehend liegt der vorliegenden Erfindung das Problem zu Grunde, ein neuartiges Verfahren zum Herstellen von rotationssymmetrischen Bauteilen zu schaffen.

Dieses Problem wird dadurch gelöst, dass das eingangs genannte Verfahren zum Herstellen von strömungsbeaufschlagten Bauteilen durch die Merkmale des kennzeichnenden Teils des Patentanspruchs 1 weitergebildet ist.

Das erfindungsgemäße Verfahren zum Herstellen von strömungsbeaufschlagten, scheibenförmigen oder ringförmigen Bauteilen betrifft u.a. die Herstellung von Rotorscheiben mit integraler Beschaufelung, d.h. von sogenannten Blisks (Bladed Disks), für alle Turbomaschinen, insbesondere Gasturbinen.

Die Rotorscheiben werden durch Fräsen und eine dem Fräsen nachgeschaltete Feinbearbeitung hergestellt, wobei das Bauteil aus einem Werkstück herausgefräst wird, und wobei nach dem Fräsen das Bauteil zur Feinbearbeitung von einem Feinbearbeitungsmittel durchströmt wird.

Erfindungsgemäß wird das Bauteil derart aus dem Werkstück herausgefräst, dass sich ergebende Fräsrillen in etwa senkrecht zur Strömungsrichtung des Feinbearbeitungsmittels am Bauteil verlaufen. Die Strömungsrichtung des Feinbearbeitungsmittels am Bauteil bzw. die Rotorscheibe verläuft demnach quer, vorzugsweise senkrecht, zu den sich bei der vorgeschalteten Fräsbearbeitung einstellenden Fräsrillen. Hierdurch wird die Effektivität der Feinbearbeitung deutlich verbessert. Eine manuelle Bearbeitung der Rotorscheibe und insbesondere der Rotorschaufeln kann entfallen. Hierdurch ergeben sich Kostenvorteile und Zeitvorteile bei der Herstellung von Rotorscheiben. Die Strömungsrichtung des Feinbearbeitungsmittels am Bauteil entspricht vorzugsweise in etwa der aerodynamischen Durchströmungsrichtung im Betrieb des Bauteils.

Nach einer vorteilhaften Weiterbildung der Erfindung wird zum Fräsen Tauchfräsen verwendet, wobei beim Tauchfräsen die Hauptvorschubrichtung eines Fräsers in Richtung seiner Fräserachse verläuft. Das Tauchfräsen, auch Stechen genannt, gewährleistet eine stabile Fräserführung bei der Fräsbearbeitung.

Vorzugsweise wird zur Feinbearbeitung Druckfließläppen oder Chemisch Unterstütztes Gleitschleifen verwendet. Ein manuelle Bearbeitung des Bauteils kann entfallen.

Eine Kombination von Druckfließläppen oder Chemisch Unterstütztem Gleitschleifen als Feinbearbeitungsverfahren und Tauchfräsen, wobei die sich bei Tauchfräsen ergebenden Fräsrillen in etwa senkrecht zu der Strömungsrichtung des Feinbearbeitungsmittels am Bauteil verlaufen, ist besonders vorteilhaft und effektiv.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:
- Fig.1:: ein Signalflussdiagramm zur Verdeutlichung einer ersten Ausführungsform des erfindungsgemäßen Verfahrens; und
- Fig. 2:: ein Signalflussdiagramm zur Verdeutlichung einer zweiten Ausführungsform des erfindungsgemäßen Verfahrens.
- Fig. 3:: eine perspektivische Teilansicht eines Bauteils, das einen Rotorträger und Schaufeln aufweist.

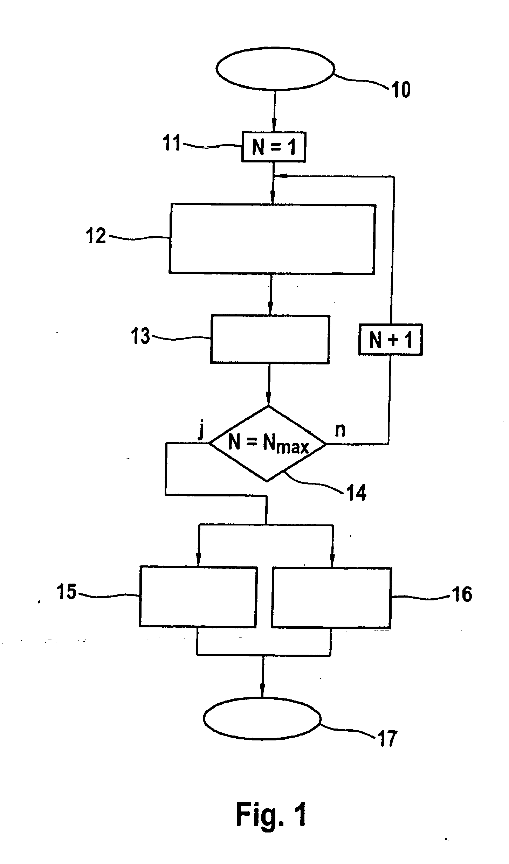

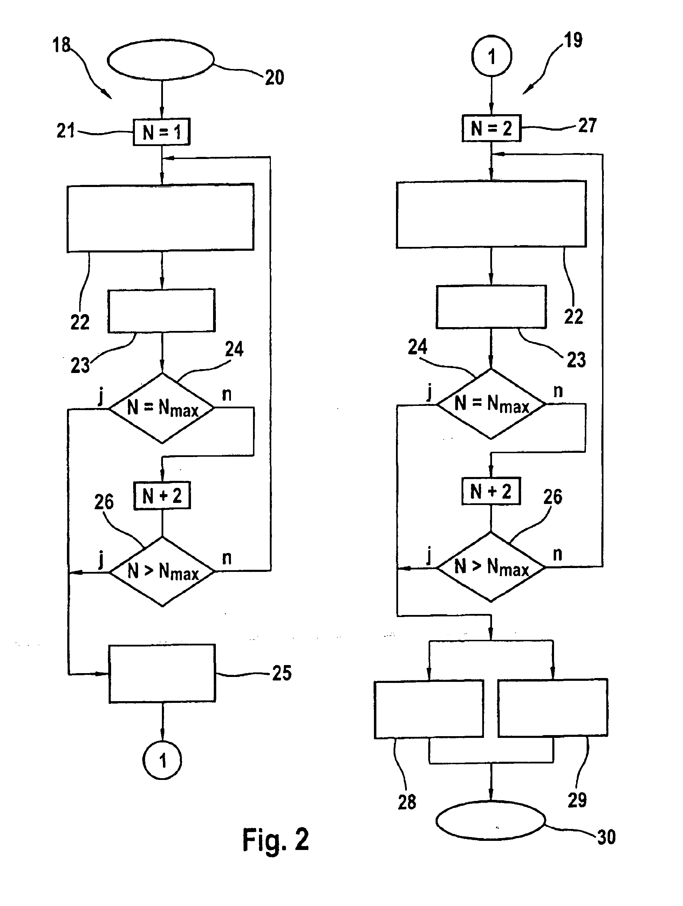

Fig. 1 und 2 zeigen Signalflussdiagramme zweier unterschiedlicher Ausführungsbeispiele des erfindungsgemäßen Verfahrens. Beide Ausführungsbeispiele betreffen jedoch die Herstellung sogenannter Blisks (Bladed Disks). Bei einer Blisk handelt es sich um eine Rotorscheibe mit integrierten Schaufeln.

So soll bei den Ausführungsbeispielen gemäß Fig. 1 und 2 eine Rotorscheibe mit insgesamt Nₘₐₓ integrierten Schaufeln hergestellt werden. Hierzu müssen in ein Werkstück durch Fräsen insgesamt Nₘₐₓ Kanäle eingebracht werden, wobei zwei benachbarte Schaufeln durch jeweils einen Kanal voneinander begrenzt sind.

Beim Ausführungsbeispiel gemäß Fig. 1 wird in einem ersten Schritt 10 das Herstellungsverfahren gestartet und nach dem Start wird ein Zähler N auf den Wert 1 gesetzt. Mithilfe des Zählers bzw. der entsprechenden Zählfunktion wird die Anzahl der in das Werkstück durch Fräsen einzubringenden Kanäle überwacht bzw. gezählt.

Nach dem Starten des Herstellungsverfahrens gemäß Schritt 10 und dem Setzen des Zählers N auf den Wert 1 gemäß Schritt 11 wird gemäß Schritt 12 durch eine Fräsbearbeitung des Werkstücks ein erster Kanal in das Werkstück gefräst. Als Fräsverfahren wird das sogenannte Tauchfräsen verwendet, wobei beim Tauchfräsen die Hauptvorschubrichtung eines Fräsers in Richtung seiner Fräserachse verläuft. Im Schritt 12 des erfindungsgemäßen Verfahrens wird zwischen zwei benachbarten Schaufeln der entsprechende Kanal ausgefräst. Darauffolgend wird gemäß Schritt 13 der sogenannte Ringraum sowie das sogenannte Fillet der Rotorscheibe im Bereich dieses Kanals gefräst.

Darauffolgend wird gemäß Schritt 14 überprüft, ob der Status des Zählers N der Maximalzahl Nₘₐₓ der herzustellenden bzw. auszufräsenden Kanäle bzw. Schaufeln entspricht. Ist dies nicht der Fall, so wird der Zähler N um 1 erhöht und es wird auf den Schritt 12 zurückverzweigt. Es wird dann mit dem Ausfräsen des nächstfolgenden Kanals zwischen zwei benachbarten Laufschaufeln begonnen. Beim Ausführungsbeispiel gemäß Fig. 1 werden demnach die Kanäle einer Ordnungszahl folgend gefräst, d.h. es wird zuerst der erste Kanal, dann der zweite Kanal, dann der dritte Kanal und letztendlich der Nₘₐₓ-te Kanal gefräst.

Wird bei der Überprüfung im Schritt 14 festgestellt, dass die Anzahl der aktuellen Frässchritte der Gesamtzahl Nₘₐₓ der herzustellenden Kanäle entspricht, so wird die Fräsbearbeitung abgebrochen und auf eine nachgeschaltete Feinbearbeitung des fertig gefrästen Bauteils verzweigt.

Im Zusammenhang mit der Fräsbearbeitung liegt es im Sinne der Erfindung, dass die Fräsbearbeitung des Werkstücks derart ausgeführt wird, dass sich ergebende Fräsrillen an der Oberfläche des herzustellenden Bauteils in etwa senkrecht bzw. quer zu einer späteren aerodynamischen Durchströmungsrichtung beim Betrieb des Bauteils verlaufen.

Als Feinbearbeitungsverfahren kommt entweder das sogenannten Chemisch Unterstützte Gleitschleifen (CUG) oder das sogenannte Druckfließläppen (DFL) zum Einsatz. Schritt 15 gemäß Fig. 1 verdeutlicht die Option des Druckfließläppens, der alternative Schritt 16 verdeutlicht die Option des Chemisch Unterstützten Gleitschleifens. Sowohl beim Druckfließläppen als auch beim Chemisch Unterstützten Gleitschleifen wird ein Feinbearbeitungsmittel relativ zur Oberfläche des herzustellenden Bauteils bewegt. Bei der Feinbearbeitung wird das Bauteil demnach vom Feinbearbeitungsmittel durchströmt.

Im Sinne der Erfindung verläuft die Strömungsrichtung des Feinbearbeitungsmittels am gefrästen Bauteil in etwa senkrecht zu der Richtung der sich bei der Fräsbearbeitung ergebenen Fräsrillen. Dies sorgt für einen besonders effektiven Abtrag bei der Feinbearbeitung. Eine manuelle Vorbearbeitung des Bauteils kann vollständig entfallen. Nach erfolgter Feinbearbeitung gemäß Schritt 15 oder Schritt 16 wird gemäß Schritt 17 das Herstellungsverfahren beendet.

Eine zweite Ausführungsform des erfindungsgemäßen Verfahrens zeigt Fig. 2. Beim Ausführungsbeispiel der Fig. 2 werden im Unterschied zum Ausführungsbeispiel gemäß Fig. 1 die Kanäle zur Freilegung der Schaufeln nicht in kontinuierlicher Reihenfolge gefräst, sondern vielmehr derart, dass in einem ersten Hauptschritt 18 des Verfahrens zuerst die Kanäle mit einer ungeraden Ordnungszahl und in einem nachgeschalteten, zweiten Hauptschritt 19 die Kanäle mit einer geraden Ordnungszahl gefräst werden. Im ersten Hauptschritt 18 wird zuerst der erste Kanal, dann der dritte Kanal, dann der fünfte Kanal usw. und im anschließenden zweiten Hauptschritt 19 wird zuerst der zweite Kanal, dann der vierte Kanal, dann der sechste Kanal usw. gefräst, bis letztendlich alle Nₘₐₓ Kanäle bzw. Schaufeln ausgefräst sind.

So wird gemäß Fig. 2 das erfindungsgemäße Verfahren des zweiten Ausführungsbeispiels bzw. der erste Hauptschritt 18 desselben im Schritt 20 gestartet und im Schritt 21 wird der Zähler N auf 1 gesetzt. Darauffolgend wird im Schritt 22 der erste Kanal gefräst und darauffolgend erfolgt im Sinne des Schritts 23 das Fräsen des Ringraums sowie Fillets im Bereich dieses Kanals. Im nachgeschalteten Schritt 24 wird sodann überprüft, ob die Anzahl der aktuell gefrästen Kanäle der Maximalzahl Nₘₐₓ der zu fräsenden Kanäle entspricht. Ist dies der Fall, so wird auf Schritt 25 verzweigt. Ist dies jedoch nicht der Fall, so wird der Zähler N um 2 erhöht und im Schritt 26 wird überprüft, ob der aktuelle Zählerstand N nun größer als Nₘₐₓ ist. Ist dies der Fall, so wird wiederum auf Schritt 25 verzweigt. Ist jedoch der aktuelle Zählerstand N im Schritt 26 kleiner als die Anzahl der maximal zu fräsenden Kanäle Nₘₐₓ, so wird auf Schritt 22 rückverzweigt. Unter Auslassen des sich unmittelbar anschließenden Kanals wird der nächste Kanal zwischen zwei benachbarten Leitschaufeln ausgefräst. Im ersten Hauptschritt 18 werden demnach alle Kanäle mit einer ungeraden Ordnungszahl gefräst.

Sind alle Kanäle mit ungerader Ordnungszahl ausgefräst, so werden gemäß Schritt 25 alle bislang ausgefrästen Kanäle mit einem thermisch schmelzbaren Material ausgegossen. Nach dem Ausgießen der bislang gefrästen Kanäle mit ungerader Ordnungszahl gemäß Schritt 25 wird gemäß Schritt 27 der Zähler N auf den Wert 2 gesetzt. Dies entspricht dem Beginn des zweiten Hauptschritts 19.

In Übereinstimmung mit dem ersten Hauptschritt 18 werden im zweiten Hauptschritt 19 dann nachfolgend alle Kanäle mit gerader Ordnungszahl gefräst. Zur Vermeidung von Wiederholungen werden daher für gleiche Verfahrensschritte gleiche Bezugsziffern verwendet.

Sobald im zweiten Hauptschritt 19 alle Kanäle mit gerader Ordnungszahl ausgefräst wurden, wird im Sinne der Schritte 28 bzw. 29 wiederum auf die Feinbearbeitung des ausgefrästen Bauteils verzweigt. Schritt 28 entspricht wiederum der Option des Druckfließläppens als Feinbearbeitung. Schritt 29 entspricht der alternativen Option des Chemisch Unterstützten Gleitschleifens als Feinbearbeitungsverfahren. Nach erfolgter Feinbearbeitung wird im Sinne des Schritts 30 das Herstellungsverfahren beendet.

Auch beim Ausführungsbeispiel des erfindungsgemäßen Verfahrens gemäß Fig. 2 erfolgt die Fräsbearbeitung derart, dass sich beim Fräsen einstellende Fräsrillen in etwa senkrecht zur aerodynamischen Durchströmungsrichtung des Bauteils im Betrieb erstrecken.

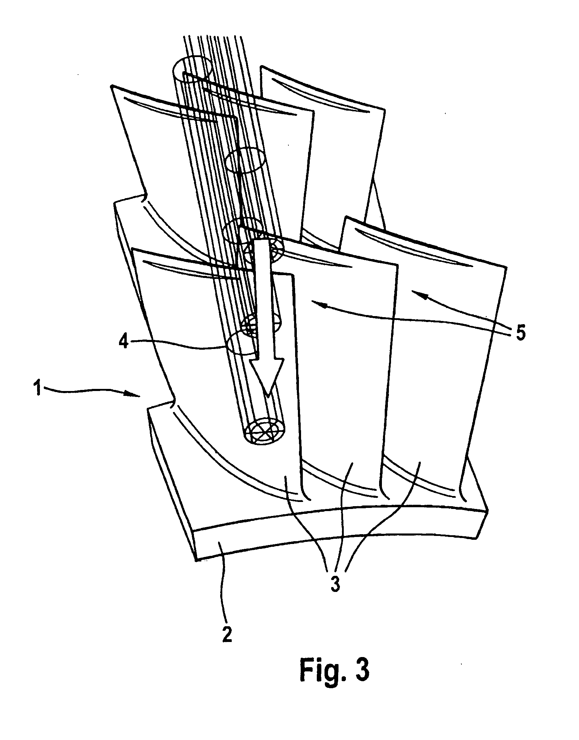

Fig. 3 zeigt eine Teilansicht in perspektivischer Darstellung eines Bauteils 1, das einen Rotorträger 2 und eine Vielzahl integral damit verbundener Schaufeln 3 aufweist. Das Bauteil 1 ist rotationssymmetrisch und wird im Betrieb in Turbomaschinen, insbesondere Gasturbinen, eingesetzt. In Fig. 3 ist hinter dem Bauteil 1 eine weitere Schaufelreihe teilweise dargestellt, wodurch angedeutet wird, dass mehrere solcher Schaufelreihen in einer Turbomaschine, insbesondere Gasturbine, hintereinander angeordnet sein können.

In Fig. 3 ist ein Fräser 4 dargestellt, wobei die Hauptvorschubrichtung des Fräsers 4 etwa in Richtung seiner Fräser- bzw. Längsachse verläuft. Zur besseren Bearbeitung können die Hauptvorschubrichtung und die Fräserachse geringfügig zueinander angestellt sein. Beim Fräsverfahren erfolgt der Materialabtrag insbesondere durch Bewegen des Fräsers 4 in seiner Hauptvorschubrichtung, wobei der Fräser 4 nach Art eines Bohrers anschließend herausgezogen, versetzt und zum weiteren Materialabtrag wieder in seiner Hauptvorschubrichtung bewegt wird. Mit der Feinbearbeitung werden die strömungstechnisch wirksamen Oberflächen des Bauteils 1, d.h. insbesondere die Oberflächen der Schaufeln 3 sowie der gesamte Fußbereich der Schaufeln 3 und der Ringraum, welcher durch die äußere Oberfläche des Rotorträgers 2 gebildet wird, bearbeitet.

Die der hier vorliegenden Erfindung zugrundeliegende Idee liegt nicht alleine in der Auswahl eines speziellen Fräsverfahrens oder Feinbearbeitungsverfahrens, sondern vielmehr in der Kombination eines Fräsverfahrens mit einem nachgeschalteten Feinbearbeitungsverfahren, wobei das Fräsverfahren derart durchgeführt wird, dass sich beim Fräsen einstellende Fräsrillen in etwa senkrecht zur Strömungsrichtung eines Feinbearbeitungsmittels am Bauteil erstrecken. Besonders vorteilhaft ist die hier vorliegende Erfindung dann, wenn als Fräsverfahren Tauchfräsen und als Feinbearbeitungsverfahren entweder Chemisch Unterstütztes Gleitschleifen oder Druckfließläppen verwendet wird.

Im Sinne der Erfindung kann ein effektiver Abtrag der Fräsrillen bei der nachgeschalteten Feinbearbeitung erzielt werden. Eine manuelle Vorbearbeitung des Bauteils kann entfallen.

### Bezugszeichenliste

- Bauteil: 1
- Rotorträger: 2
- Schaufel: 3
- Fräser: 4
- Kanal: 5
- Schritt: 10
- Schritt: 11
- Schritt: 12
- Schritt: 13
- Schritt: 14
- Schritt: 15
- Schritt: 16
- Schritt: 17
- Hauptschritt: 18
- Hauptschritt: 19
- Schritt: 20
- Schritt: 21
- Schritt: 22
- Schritt: 23
- Schritt: 24
- Schritt: 25
- Schritt: 26
- Schritt: 27
- Schritt: 28
- Schritt: 29
- Schritt: 30

## Patentansprüche

1. Verfahren zum Herstellen von scheibenförmigen oder ringförmigen, strömungsbeaufschlagten Bauteilen, insbesondere von Rotorscheiben mit integraler Beschaufelung für Turbomaschinen, durch Fräsen und dem Fräsen nachgeschaltete Feinbearbeitung, wobei das Bauteil aus einem Werkstück herausgefräst wird, und wobei nach dem Fräsen das Bauteil zur Feinbearbeitung von einem Feinbearbeitungsmittel durchströmt wird, **dadurch gekennzeichnet, dass** das Bauteil (1) derart aus dem Werkstück herausgefräst wird, dass sich ergebende Fräsrillen in etwa senkrecht zu einer Strömungsrichtung des Feinbearbeitungsmittels am Bauteil (1) verlaufen.

2. Verfahren nach Anspruch 1, **dadurch gekennzeichnet, dass** zum Fräsen Tauchfräsen verwendet wird, wobei beim Tauchfräsen die Hauptvorschubrichtung eines Fräsers (2) zumindest annähernd in Richtung seiner Fräserachse verläuft.

3. Verfahren nach Anspruch 1 oder 2, **dadurch gekennzeichnet, dass** zur Feinbearbeitung Druckfließläppen verwendet wird.

4. Verfahren nach Anspruch 1 oder 2, **dadurch gekennzeichnet, dass** zur Feinbearbeitung Chemisch Unterstütztes Gleitschleifen (CUG) verwendet wird.

5. Verfahren nach einem der vorangegangenen Ansprüche, **dadurch gekennzeichnet, dass** die Strömungsrichtung des Feinbearbeitungsmittels am Bauteil (1) entsprechend der aerodynamischen Durchströmungsrichtung des Bauteils (1) im Betrieb gewählt wird.

6. Verfahren nach einem der Ansprüche 2 bis 5, **dadurch gekennzeichnet, dass** die Fräsrillen in Hauptvorschubrichtung des Fräsers (4) verlaufen.

7. Verfahren nach einem der vorangegangenen Ansprüche, **dadurch gekennzeichnet, dass** durch Herausfräsen einer Vielzahl von gleichmäßig über einen Umfang des Bauteils (1) verteilten Kanälen (5) dazwischenliegende, strömungstechnisch wirksame Schaufeln (3) hergestellt bzw. erzeugt werden.

8. Verfahren nach einem der vorangegangenen Ansprüche, **dadurch gekennzeichnet, dass** mit der Feinbearbeitung die gesamte strömungstechnisch wirksame Oberfläche des Bauteils (1), insbesondere die Oberflächen von dessen Schaufeln (3), erfasst wird.

9. Verfahren nach einem der vorangegangenen Ansprüche, **dadurch gekennzeichnet, dass** die Dauer der Feinbearbeitung so eingestellt wird, dass die Fräsrillenstruktur bis auf ein aerodynamisch und festigkeitstechnisch tolerierbares Maß oder vollständig geglättet wird.

## Claims

1. Method for producing disk-shaped or ring-shaped components that are exposed to a flow, in particular rotor disks with integral blading for turbomachines, by milling and fine-machining after the milling, wherein the component is milled out of a workpiece, and wherein after the milling a fine-machining medium flows through the component for the fine-machining, **characterised in that** the component (1) is milled out of the workpiece in such a way that resultant milled grooves extend substantially perpendicularly to a direction of flow of the fine-machining medium at the component (1).

2. Method according to claim 1, **characterised in that** plunge-milling is used for the milling, wherein during the plunge-milling the main feed direction of a milling cutter (2) extends at least approximately in the direction of its milling-cutter axis.

3. Method according to claim 1 or 2, **characterised in that** abrasive-flow machining is used for the fine-machining.

4. Method according to claim 1 or 2, **characterised in that** chemically assisted slide grinding is used for the fine-machining.

5. Method according to one of the preceding claims, **characterised in that** the direction of flow of the fine-machining medium at the component (1) is selected in accordance with the aerodynamic direction of flow through the component (1) during operation.

6. Method according to one of claims 2 to 5, **characterised in that** the milled grooves extend in the main feed direction of the milling cutter (4).

7. Method according to one of the preceding claims, **characterised in that** by milling out a plurality of channels (5) uniformly distributed over a circumference of the component (1) fluidically effective blades (3) lying in between are produced or generated.

8. Method according to one of the preceding claims, **characterised in that** the whole fluidically effective surface of the component (1), in particular the surfaces of its blades (3), is covered by the fine-machining.

9. Method according to one of the preceding claims, **characterised in that** the duration of the fine-machining is set in such a way that the milled-groove structure is smoothed to a measure that is tolerable aerodynamically and in terms of strength or is smoothed completely.

## Revendications

1. Procédé de fabrication de composants en forme de disques ou d'anneaux, sollicités par un flux, en particulier de disques de rotor à aubage intégré pour turbomachines, par fraisage et par usinage de précision consécutif au fraisage, le composant étant fraisé à partir d'une pièce, et après fraisage un fluide d'usinage de précision s'écoulant à travers le composant pour l'usinage de précision, **caractérisé en ce que** le composant (1) est fraisé à partir de la pièce de telle manière que les rainures de fraisage en résultant s'étendent sensiblement perpendiculairement à une direction d'écoulement du fluide d'usinage de précision sur le composant (1).

2. Procédé selon la revendication 1, **caractérisé en ce que** le fraisage mise en oeuvre est un fraisage en plongée, la direction d'avance principale d'une fraise (2) correspondant au moins sensiblement à la direction de son axe de fraise lors du fraisage en plongée.

3. Procédé selon la revendication 1 ou 2, **caractérisé en ce que** l'usinage de précision mis en oeuvre est un usinage par écoulement abrasif.

4. Procédé selon la revendication 1 ou 2, **caractérisé en ce que** l'usinage de précision mis en oeuvre est une tribo-finition mécano-chimique (CUG).

5. Procédé selon l'une des revendications précédentes, **caractérisé en ce que** la direction d'écoulement du fluide d'usinage de précision sur le composant (1) est choisie en fonction de la direction d'écoulement aérodynamique du composant (1) en service.

6. Procédé selon l'une des revendications 2 à 5, **caractérisé en ce que** les rainures de fraisage s'étendent dans la direction d'avance principale de la fraise (4).

7. Procédé selon l'une des revendications précédentes, **caractérisé en ce que**, par fraisage d'une pluralité de canaux (5) régulièrement distribués à la périphérie du composant (1), sont fabriquées ou produites entre les canaux des pales (3) fluidiquement efficaces.

8. Procédé selon l'une des revendications précédentes, **caractérisé en ce que** toute la surface fluidiquement efficace du composant (1), en particulier les surfaces des pales (3) de celui-ci, est déterminée par l'usinage de précision.

9. Procédé selon l'une des revendications précédentes, **caractérisé en ce que** la durée de l'usinage de précision est ajustée de manière à lisser la structure des rainures de fraisage, totalement ou dans une mesure tolérable en termes d'aérodynamique et de résistance technique.
